# EUROPEAN PATENT APPLICATION

(11) **EP 4 399 959 A1**
(43) Date of publication of application: **17.07.2024**
(21) Application number: 23151729.3
(22) Date of filing: 16.01.2023
(51) Int. Cl.: A01G 5/04, A47G 7/02, A47G 7/04, A47G 7/06, A01G 27/02

(54) **FLOWER TRAY**

(71) Applicant: Chu Hsing Metal Co., Ltd., Fuxing Township Chang hua (TW)
(72) Inventor: WANG, Kuan-Chuan, Fuxing Township, Changhua County (TW)
(74) Representative: Lang, Christian

(57) **Abstract**

A flower tray combination contains: a tray (10) and at least one accommodation tube (20). The tray (10) includes a bottom face (11), a peripheral fringe (12) extending from the bottom face(11), a water receiving groove (13) defined by the bottom face (11) and the peripheral fringe (12), and at least one positioning cliff (14) extending from the bottom face (11). A respective one positioning cliff (14) has at least one cutout (140) defined thereon. A respective one accommodation tube (20) of the at least one accommodation tube is provided on the tray (10) to abut against an inner or outer wall of a respective one positioning cliff (14) of the at least one positioning cliff (14) matingly.

## Description

### TECHNICAL FIELD

The present disclosure relates to a flower tray combination which is capable of accommodation flowers based on using requirements flexibly and obtaining aesthetic decoration.

### BACKGROUND

General special occasions such as: weddings and funerals, birthday parties, seminars, religious activities, etc., are arranged in metropolises to increase the atmosphere of the venue, and general flower arrangements are divided into many genres, and there are also many occasions will be decorated by flower tray combinations.

Among them, the general flower arrangement system is a general water basin, and the special Kenzan pinholder or absorbent sponge for flower arrangement is placed on the surface for flower arrangement. However, if the flower art is not yet proficient or beginners often need to fiddle with the position and angle of the flowers many times, it is easy to cause damage. The water-absorbing sponge is damaged or the bottom of the flower is damaged due to the use of Kenzan pinholder, which increases the difficulty of flower arrangement technology, and increases the cost of flower arrangement learners or cannot be effectively improved.

In addition, due to the need for a high-bottom drop, the potted plant combination usually needs to be placed in a higher flower container, which is not only environmentally friendly but also prone to mold.

The present invention has arisen to mitigate and/or obviate the aforedescribed disadvantages.

### SUMMARY

A primary aspect of the present invention is to provide a flower tray combination which is capable of accommodation flowers based on using requirements flexibly and obtaining aesthetic decoration.

To obtain above-mentioned aspect, a flower tray combination provided by the present invention contains: a tray and at least one accommodation tube. The tray includes a bottom face, a peripheral fringe extending from the bottom face, a water receiving groove defined by the bottom face and the peripheral fringe, and at least one positioning cliff extending from the bottom face. A respective one positioning cliff has at least one cutout defined thereon. A respective one accommodation tube of the at least one accommodation tube is provided on the tray to abut against an inner or outer wall of a respective one positioning cliff of the at least one positioning cliff matingly.

Preferably, five positioning cliffs extend from the bottom face of the tray.

Preferably, the bottom face has at least one slot formed thereon and located inside the respective one positioning cliff, wherein a respective one slot of the at least one slot corresponds to the cutout of the respective one positioning cliff.

Preferably, multiple accommodation tubes are provided on the tray and include different heights.

Preferably, the respective one accommodation tube is conical, and a diameter of a cross section of the respective one accommodation tube is decreased from the opening of the tray to the bottom face so that the respective one accommodation tube abuts against the respective one positioning cliff.

Preferably, the respective one positioning cliff is conical, and a diameter of a cross section of the respective one positioning cliff is decreased from an opening of the tray to the bottom face of the tray.

### BRIEF DESCRIPTION OF THE DRAWINGS

FIG. 1 is a perspective view showing the assembly of a flower tray combination according to a preferred embodiment of the present invention.
FIG. 2 is a perspective view showing the exploded components of the flower tray combination according to the preferred embodiment of the present invention.
FIG. 3 is a cross sectional view showing the assembly of the flower tray combination according to the preferred embodiment of the present invention.

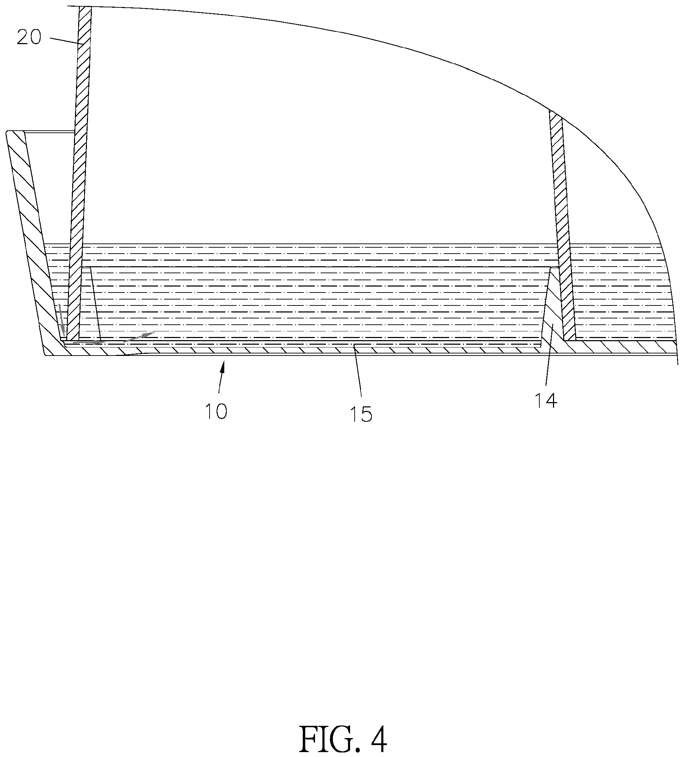

FIG. 4 is an amplified cross-sectional view showing the application of a part of the flower tray combination according to the preferred embodiment of the present invention.
FIG. 5 is another amplified cross-sectional view showing the application of a part of the flower tray combination according to the preferred embodiment of the present invention.
FIG. 6 is a perspective view showing the application of the flower tray combination according to the preferred embodiment of the present invention.
FIG. 7 is a perspective view showing another application of the flower tray combination according to the preferred embodiment of the present invention.
FIG. 8 is a perspective view showing another application of a flower tray combination according to another preferred embodiment of the present invention.

### DETAILED DESCRIPTION

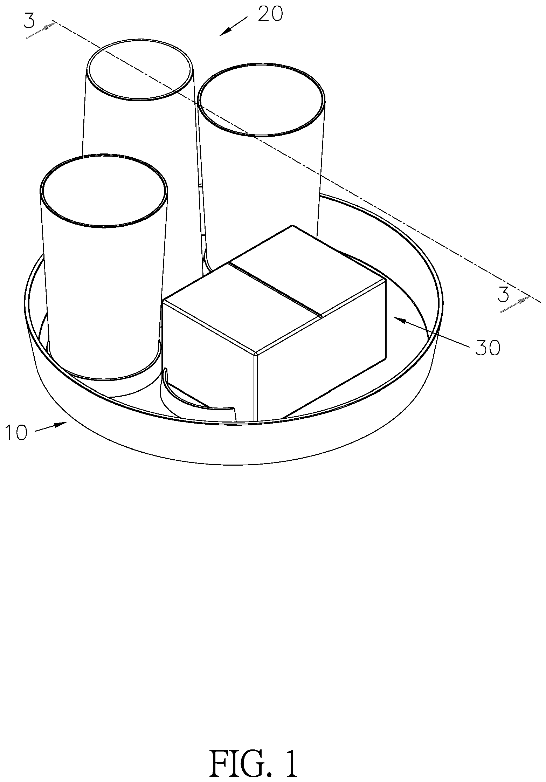

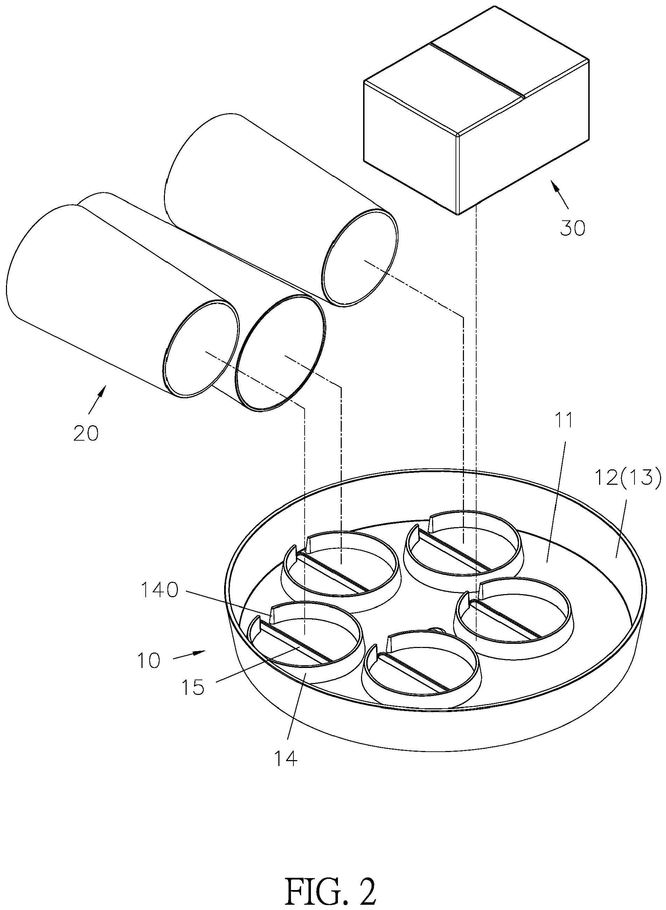

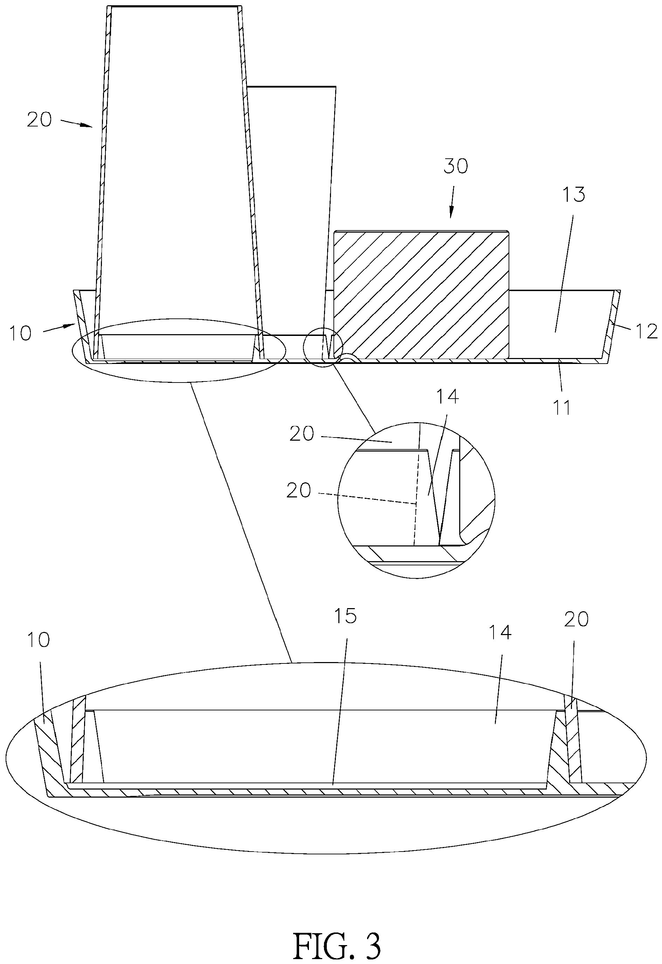

With reference to FIGS. 1-3, a flower tray combination according to a preferred embodiment of the present invention comprises: a tray 10 and at least one accommodation tube 20.

The tray 10 includes a bottom face 11, a peripheral fringe 12 extending from the bottom face 11, a water receiving groove 13 defined by the bottom face 11 and the peripheral fringe 12, and at least one positioning cliff 14 extending from the bottom face 11, wherein an inner wall of a respective one positioning cliff 14 is conical, and a diameter of a cross section of the inner wall of the respective one positioning cliff 14 is decreased from an opening of the tray 10 to the bottom face 11 of the tray 10. In this embodiment, five positioning cliffs 14 extend from the bottom face 11, and a respective one positioning cliff 14 has at least one cutout 140 defined thereon. In this embodiment, a cutout 140 is defined on the respective one positioning cliff 14, and the bottom face 11 has at least one slot 15 formed thereon and located inside the respective one positioning cliff 14, wherein a respective one slot 15 of the at least one slot 15 corresponds to the cutout 140 of the respective one positioning cliff 14.

A profile of the tray 10 is formed in a circle shape or other shapes (such as an oval or a rectangle).

In this embodiment, three accommodation tubes 20 are provided on the tray 10 and include different heights, wherein an outer wall of a respective one accommodation tube 20 is conical to correspond to the inner wall of the respective one positioning cliff 14 so that the respective one accommodation tube 20 abuts against the respective one positioning cliff 14 matingly, wherein a diameter of a cross section of the outer wall of the respective one accommodation tube 20 is decreased from the opening of the tray 10 to the bottom face 11 so that the outer wall of the respective one accommodation tube 20 abuts against the inner wall of the respective one positioning cliff 14.

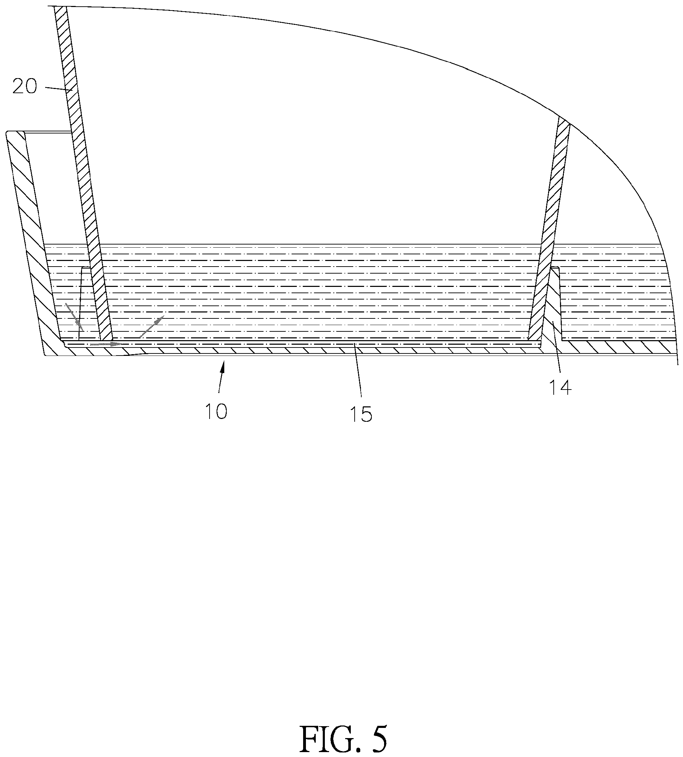

In another embodiment, the respective one accommodation tube 20 abuts against an outer wall of the respective one positioning cliff 14 of the tray 10, as shown in FIG. 5.

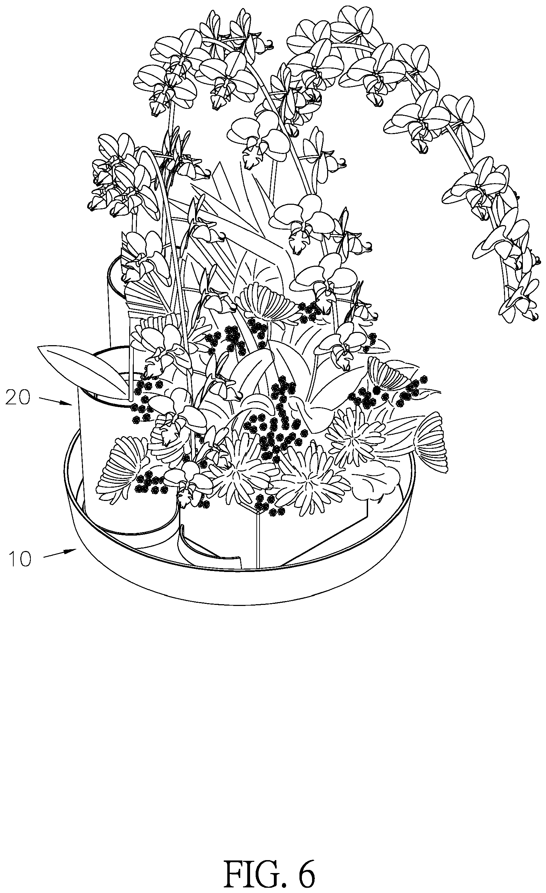

In application, the three accommodation tubes 20 abut against inner or outer walls of the three positioning cliffs 14 of the tray 10 based on using requirements, such that the three accommodation tubes 20 are fixed on the tray 10, a sponge 30 is engaged with two positioning cliffs 14 of the three positioning cliffs 14, and waters (not indicated by a numerical reference) are added into the tray 10 to flow into the respective one accommodation tube 20 and to be absorbed by the sponge 30 via the slot 15 of the respective one positioning cliffs 14. Referring to FIG. 6, flowers (not designated by a numerical reference) are fixed in the three accommodation tubes 20 and the tray 10 based on the using requirements.

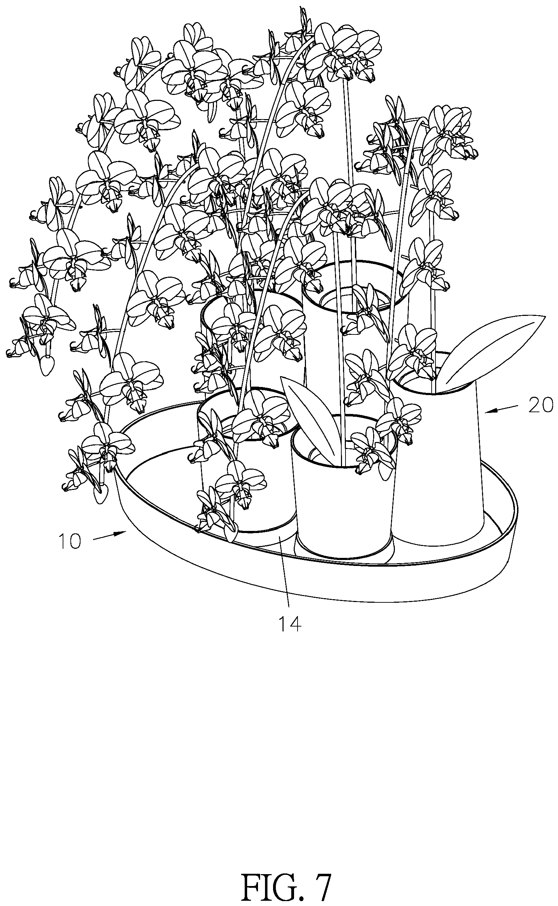

In another embodiment, as illustrated in FIG. 7, five positioning cliffs 14 extend from the bottom face 11 of the tray 10, and five accommodation tubes 20 of different heights against outer or inner walls of the five positioning cliffs 14 of the tray 10, and a plant (not shown and such as an orchid) is fixed inside the respective one positioning cliff 14 and is not received in the waters of the tray 10, thus obtaining the flower tray combination and aesthetics decoration without using Styrofoam.

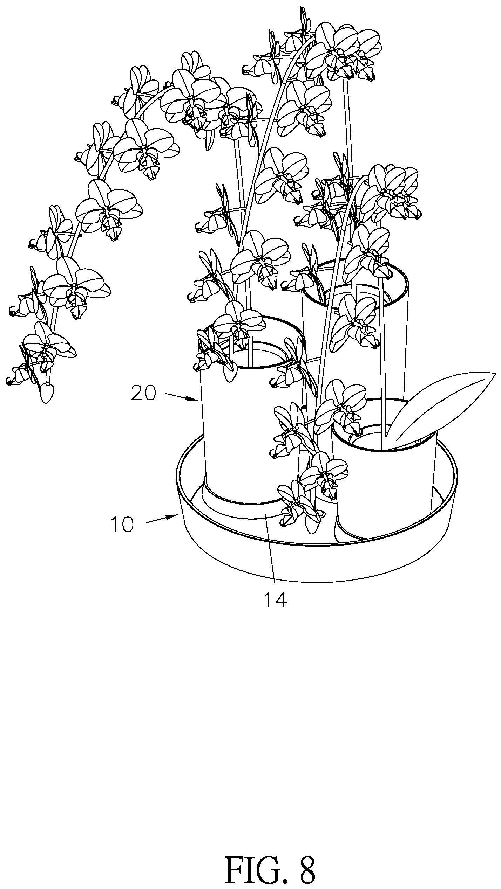

Preferably, at least one positioning cliff 14 is provided on the tray 10 based on the using requirements flexibly. For example, as shown in FIG. 8, three positioning cliffs 14 are provided on the tray 10, and the at least one accommodation tubes 20 abuts against the inner or outer walls of the three positioning cliffs 14 to receive the flowers, wherein the waters are added or not added into the tray 10 flexibly based on the using requirements.

Having described the invention in detail, it will be apparent that modifications and variations are possible without departing from the scope of the invention defined in the appended claims.

When introducing elements of the present invention or the preferred embodiments thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved, and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. A flower tray combination comprising:
a tray including a bottom face, a peripheral fringe extending from the bottom face, a water receiving groove defined by the bottom face and the peripheral fringe, and at least one positioning cliff extending from the bottom face, wherein a respective one positioning cliff has at least one cutout defined thereon; and
at least one accommodation tube, wherein a respective one accommodation tube of the at least one accommodation tube is provided on the tray to abut against an inner or outer wall of the respective one positioning cliff of the at least one positioning cliff matingly.

2. The flower tray combination as claimed in claim 1, wherein five positioning cliffs extend from the bottom face of the tray.

3. The flower tray combination as claimed in claim 1, wherein the bottom face has at least one slot formed thereon and located inside the respective one positioning cliff, wherein a respective one slot of the at least one slot corresponds to the cutout of the respective one positioning cliff.

4. The flower tray combination as claimed in claim 1, wherein multiple accommodation tubes are provided on the tray and include different heights.

5. The flower tray combination as claimed in claim 1, wherein the respective one accommodation tube is conical, and a diameter of a cross section of the respective one accommodation tube is decreased from the opening of the tray to the bottom face so that the respective one accommodation tube abuts against the respective one positioning cliff.

6. The flower tray combination as claimed in claim 1, wherein the respective one positioning cliff is conical, and a diameter of a cross section of the respective one positioning cliff is decreased from an opening of the tray to the bottom face of the tray.
